# EUROPEAN PATENT SPECIFICATION

(11) **EP 1 574 484 B1**
(45) Date of publication and mention of the grant of the patent: **15.01.2014**
(21) Application number: 05101852.1
(22) Date of filing: 10.03.2005
(51) Int. Cl.: C03B 33/02, C03B 33/07, C03B 33/10, B65G 49/06, B32B 17/10

(54) **Method of cutting and parting sheets of glass, and vertical apparatus implementing such a method**
Verfahren zum Schneiden und Trennen von Glasscheiben, und vertikale Vorrichtung zur Herstellung dieses Verfahrens
Procédé de coupe et séparation de feuilles de verre, et appareil vertical associé au procédé

(30) Priority: 11.03.2004 IT TO20040158
(43) Date of publication of application: 14.09.2005
(73) Proprietor: Bottero S.p.A., 12010 Cuneo (IT)
(72) Inventor: Ghinamo, Paolo, 12012 Boves (IT); Bertolino, Valerio, 12040 Morozzo (IT)
(74) Representative: Bergadano, Mirko

(56) References cited:
- EP-A- 0 835 847
- EP-A- 1 172 189
- US-A- 5 873 922
- PATENT ABSTRACTS OF JAPAN vol. 2000, no. 03, 30 March 2000 (2000-03-30) -& JP 11 343132 A (SONY CORP), 14 December 1999 (1999-12-14)

## Description

The present invention relates to a method of cutting and parting sheets of glass.

To cut and part sheets of multilayer or laminated glass, to which the following description refers purely by way of example, so-called "vertical" systems are used, in which the sheet is first cut and then parted in a substantially on-edge position at all times.

Such "vertical" systems are disclosed, for example, in US 5, 873, 922.

For this purpose, known vertical system comprise two cutting-parting assemblies spaced apart along a longitudinal path along which the loaded sheets are cut and parted; and a rotation assembly located along the path, between the cutting-parting assemblies. As it travels through the first cutting-parting assembly, the sheet is cut and parted along a first number of parallel vertical cutting lines to form a number of side by side sheet portions, each of which is then engaged by the rotation assembly, is rotated 90° about a horizontal axis onto one edge as disclosed in EP 0 835 847 A1, and is then fed through the other cutting-parting assembly, which, like the first, cuts and parts each sheet portion along one or more straight parallel vertical cutting lines to form two or more plate glass articles.

Though widely used, the above cutting-parting method has the major drawback of requiring considerable work space, both in height and in the feed direction of the sheets. This is particularly so in the rotation assembly work area where, since the sheet portions are rotated about a horizontal axis, the work space in height must at least equal the diagonal of the sheet portion, and the work space in the feed direction must at least equal the height of the loaded sheet. To cut all commonly marketed sheets of glass, therefore, known vertical systems of the type described require a work space of no less than 6.5 - 7 metres in height.

Rotating the sheet portions is also complicated, particularly in the case of large, thin sheet portions and sheets of considerable weight, as are normally sheets of laminated glass. In such cases, in fact, extra care must be taken to prevent accidental impact and/or flexing, which, in the case of thin sheet portions, inevitably results in breakage and therefore rejection of the sheet portion. In addition to machine stoppages to clean the machine, and the loss in production involved, breakage of a sheet portion is also a serious safety hazard by exposing machine operators to free-falling broken sheet portions.

The presence of a rotation assembly also makes the system relatively complex, and greatly increases both production and maintenance cost.

Finally, using the cutting-parting method described above, only one sheet portion at a time can be worked after the first cutting-parting stage, thus limiting output of the finished products.

It is an object of the present invention to provide a method of cutting and parting sheets of glass, designed to provide a straightforward, low-cost solution to the above drawbacks.

It is a further object of the present invention to provide a vertical apparatus for cutting and parting sheets of glass, which is cheap and easy to produce and operates reliably and efficiently.

According to the present invention, there is provided a method of cutting and parting sheets of glass, as claimed in Claim 1.

The present invention also relates to a vertical apparatus for cutting and parting sheets of glass.

According to the present invention, there is provided a vertical apparatus for cutting and parting sheets of glass, as claimed in Claim 12.

A non-limiting embodiment of the invention will be described by way of example with reference to the accompanying drawings, in which:
Figure 1 shows a schematic side view of a preferred embodiment of a vertical system for cutting and parting sheets of glass in accordance with the teachings of the present invention;
Figure 2 shows a section along line II-II in Figure 1;
Figure 3 shows a detail of Figure 1 along line III-III in Figure 1;
Figure 4 shows a section of a further detail of Figure 1;
Figure 5 shows a view in perspective of a detail in Figure 2;
Figure 6 shows a view in perspective of a detail in Figure 5.

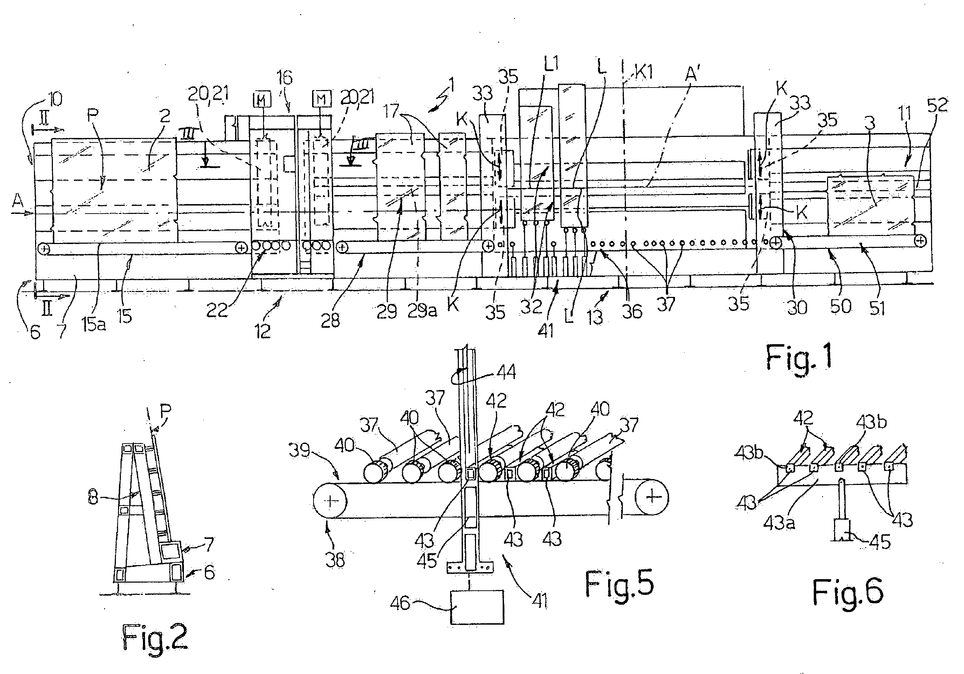

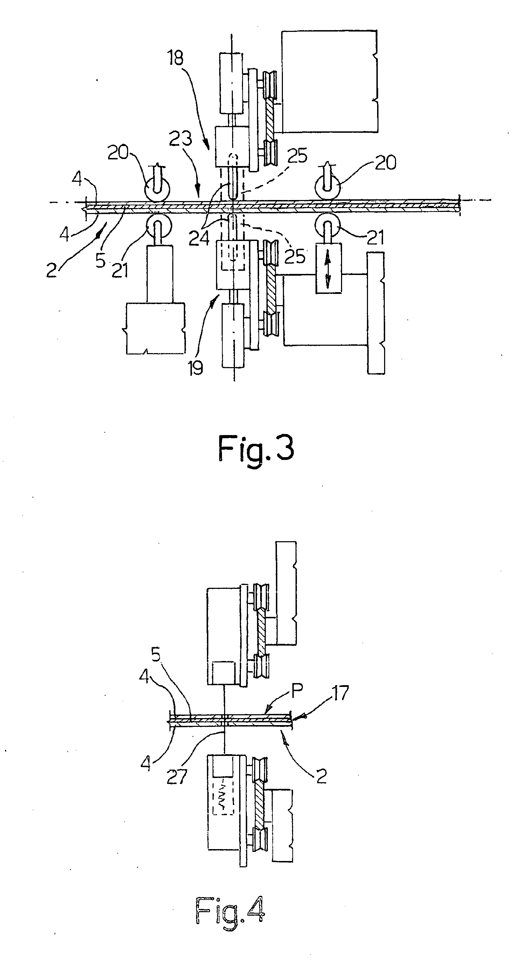

Number 1 in Figure 1 indicates as a whole a vertical system for cutting and parting sheets 2 of glass to produce flat quadrangular products 3. In the particular example shown, system 1 is equipped to cut and part sheets of laminated glass, i.e. comprising two outer sheets of glass 4, and an intermediate sheet or layer 5 of synthetic material (Figures 3 and 4), and comprises en elongated frame 6 extending in a straight direction A in which sheets 2 are fed during the cutting and parting operations. Frame 6 in turn comprises a base 7; and a sloping lateral wall 8 (Figure 2) extending upwards from base 7 and fitted with a number of known revolving bodies (not shown) defining an inclined lateral supporting surface P for sheets 2. On frame 6, in direction A, are formed two end stations 10 and 11, respectively for loading sheets 2 to be cut and parted, and unloading the resulting flat products 3; and two intermediate cutting-parting stations 12 and 13, spaced apart from each other and each from the respective end station 10, 11.

A belt conveyor 15 extends between loading station 10 and cutting-parting station 12, close to base 7, and has a feed branch 15a extending parallel to direction A. Sheets 2, positioned on edge on feed branch 15a and resting against surface P, are fed into station 12 and through a cutting-parting assembly 16 at station 12 to cut and part sheets 2, along a number of parallel cutting lines parallel to surface P and perpendicular to direction A, into a number of sheet portions 17.

As shown particularly in Figure 3, assembly 16 comprises two known cutting-parting devices 18 and 19 facing each other on opposite sides of sheet 2 and comprising respective pairs of facing rollers 20 and 21. The rollers in each pair are independent, and are powered to rotate about respective axes parallel to surface P and perpendicular to direction A, and to feed sheets 2 and/or sheet portions 17 in direction A on a roller table 22, at least some of the rollers of which are powered. Rollers 20, 21 of each device 18, 19 are spaced apart in direction A to define a gap 23, in which a relative known cutting tool 24 runs to cut a relative outer sheet 4 along the relative cutting lines. The cut outer sheets 4 are parted in known manner, conveniently by means of parting wheels 25, and intermediate sheet 5 is cut in known manner, conveniently by means of a powered blade cutter (not shown), after first separating the parted sheet portions by means of rollers 20, 21. Alternatively, in a variation shown in Figure 4, the blade cutter is replaced by a wire 27 held taut between two powered supports on opposite sides of supporting surface P and sheet 2. Sheet portions 17 produced at station 12 are fed successively to station 13, traveling parallel to themselves in direction A, first by powered rollers 20, 21 and roller table 22, and then by a belt conveyor 28 located close to base 7 and defining an extension of conveyor 15 on the opposite side of roller table 22. For greater travelling precision, conveyor 28 is synchronized with a further conveyor 29 associated with lateral wall 8 and having a feed branch 29a starting from station 12 and coming into station 13.

Station 13 houses a cutting-parting assembly 30 similar to assembly 16, and the component parts of which are indicated, where possible, using the same reference numbers as for the corresponding parts of assembly 16. Assembly 30 is fitted to frame 6 in a position rotated 90° with respect to assembly 16, so that its cutting tools 24, parting wheels 25, and intermediate layer blade cutter run back and forth in a direction A' parallel to direction A, to cut sheet portions 17 along cutting lines L, L1 perpendicular to the cutting lines in station 12. In the embodiment described, cutting tools 24, parting wheels 25, and the blade cutter run along respective known bridges 32 shown schematically in Figure 1 and connected integrally to respective posts 33, in turn connected integrally to frame 6. Alternatively, bridges 32 are fitted to respective powered carriages 35 (shown schematically in Figure 1) movable up and down along posts 33 in a direction K parallel to surface P and perpendicular to direction A, to adjust the height of bridges 32 and therefore of the cutting tools, parting wheels, and intermediate layer blade cutter.

In station 13, sheet portions 17 rest on a roller table 36 comprising a number of parallel, side by side rollers 37 perpendicular to supporting surface P (Figures 1 and 5). Rollers 37 are powered by a drive 38 (Figure 5) located at one axial end of rollers 37 and preferably comprising a toothed belt 39 looped about two powered transmission wheels and meshing with a number of pinions 40, each fitted to an end portion of a relative roller 37. Station 13 also houses a modular, configurable lift assembly 41 comprising a number of lift members or blocks 42 (Figure 2) extending parallel to and alternating with rollers 37. Each block 42 is carried by a relative slide 43 fitted to run along a relative straight guide 44 connected integrally to frame 6 and parallel to supporting surface P and perpendicular to direction A.

Lift assembly 41 also comprises, for each block 42, an air-powered jack 45 located at station 13 to move relative block 42, along relative guide 44, to and from a lowered position in which sheet portions 17 rest solely on rollers 37. Jacks 45 are controlled independently of one another by a known pneumatic assembly 46, so that, for each sheet portion 17, a respective group of blocks 42, comprising a number of blocks proportional to the dimension of the sheet portion is direction A, is activated.

In the Figure 6 variation, as opposed to moving only one block 42, all or at least some of jacks 45 move a number of adjacent blocks 42, the slides 43 of which are connected, each time, to the output rod of the relative jack 45 by means of a mechanical selecting device defined, for example, by a connecting plate 43a with holes, which is selectable from a number of different connecting plates, and is connected on one side to the output rod of the jack, and on the other side to the various slides by means of straightforward screws 43b. In this case too, the connecting plate 43a, and therefore the number of blocks 42 to be activated, is selected as a function of the size of sheet portions 17 resting on rollers 37.

Rollers 37 form part of an unloading assembly 50 for moving the products 3 produced at station 13 to station 11. As shown in Figure 1, unloading assembly 50 also comprises a bottom supporting conveyor 51 identical to conveyor 28, and a lateral conveyor 52 identical to conveyor 29.

In actual use, sheets 2 to be cut and parted, and resting on conveyor 15 and sloping surface P at station 10, are fed to station 12, where they are first cut and then parted into two or more sheet portions 17. Sheet portions 17 are then transferred, parallel to themselves in direction A, from roller table 22 onto conveyor 28, which feeds them successively onto rollers 37 and previously lowered blocks 42 at station 13. At this point, groups of blocks 42 are formed, depending on the position in direction A and the transverse dimensions of sheet portions 17, and each sheet portion 17, maintained contacting surface P at all times, is raised by the relative group of blocks 42, in a positioning direction K1 parallel to direction K, to a given height, so that the first product 3 produced rests directly on blocks 42. At this point, sheet portion 17 is cut and parted in known manner by assembly 30 to form the first product 3, which, resting on blocks 42, is eased down, while the rest of the sheet portion is clamped between rollers 20, 21 of assembly 30. On coming to rest on rollers 37, product 3 is released by the relative group of blocks 42 and can therefore be fed to unloading station 11. As soon as product 3 leaves station 13, the group of blocks 42 is moved back up into a position close to assembly 30, which, by means of rollers 20, 21, eases the relative sheet portion down onto blocks 42, which are again set to a given height in direction K to produce a second product 3, which is formed and unloaded from station 13 in the same way as described above.

If bridges 32 are also movable in direction K, the movement of blocks 42 is synchronized with the movement of bridges 32 to minimize the travel distance, and therefore time, of both the sheet portion and products with respect to rollers 37.

As compared with known solutions, system 1 as described therefore requires very little work space both in height and in the feed direction of the sheets, mainly on account of both the sheets and the products produced by cutting and parting the sheets being moved in a straight direction and parallel to themselves at all times. The sheets, sheet portions, and finished products are moved at all times substantially on edge, and at any rate resting at all times on respective fixed or translating supports; which conveying method has been found to permit cutting and parting of commonly marketed sheets with a work space of barely 5 metres in height.

Unlike known solutions, translating the sheets/sheet portions/finished products parallel to themselves and resting at all times on a lateral surface prevents flexing and/or shifting of the sheet portions in the case of thin sheets, and/or accidental impact and handling problems in the case of heavy sheets, thus drastically reducing breakage or chipping of the conveyed plate glass products.

Finally, by virtue of the structure of station 13 and the way in which the plate glass products are handled in station 13, not only can station 13 house a number of sheet portions, but the sheet portions can be cut and parted simultaneously to produce finished products of the same or even widely differing shape or size. This is due to the presence of independently operated lifting blocks, which can be grouped according to the size of sheet portions 17, thus enabling the sheet portions to be worked independently within the same station, and so increasing the output rate of the system.

Output rate is further increased when the position of bridges 32 is also adjustable with respect to supporting rollers 37, in that the position of the bridges can be adjusted arbitrarily at any time, even in the presence of sheet portions 17 at station 13, as well as independently of the adjustment of blocks 42.

As compared with known solutions, system 1 is extremely straightforward and cheap to produce, while at the same time being highly efficient, reliable, and safe.

Clearly, changes may be made to the system as described herein without, however, departing from the protective scope defined in the main Claims. In particular, different devices may be provided at station 13 to move sheet portions 17 to and from the supporting surface defined by rollers 37.

## Claims

1. A method of cutting and parting sheets of glass and of moving said sheets along an horizontal direction (A) in the plane of the sheets, the method comprising the steps of :
- setting a sheet (2) to be cut and parted into a vertical or on edge position;
- cutting said sheet (2) along at least one first cutting line perpendicular to direction (A);
- parting the sheet along said first cutting line to form at least two side by side sheet portions (17) positioned on edge;
- transferring the sheet portions (17) to a cutting-parting station (13); and,
- at the cutting-parting station, cutting each said sheet portion along at least one second cutting line in a direction (A') parallel to direction (A),
- and parting the sheet portion along said second cutting line to form flat products (3);
**characterized in that** said sheet portions (17) are transferred to said cutting-parting station (13) by translating the sheet portions (17) parallel to themselves in a straight feed direction (A); and then positioning each sheet portion (17) and the cutting member (24) by translating them with respect to each other in a straight positioning direction (K1) crosswise to said straight feed direction (A) and then each sheet portion is cut along said second cutting line by imparting to a cutting member (24) at least one travel component in a direction (A') parallel to said straight feed direction (A).

2. A method as claimed in Claim 1, **characterized by** transferring a number of said sheet portions (17) to said cutting-parting station, and cutting all the sheet portions (17) simultaneously along said second cutting line.

3. A method as claimed in Claim 1 o 2, **characterized in that** said sheet portions (17) and said cutting member (24) are translated with respect to one another in said straight positioning direction (K1) by maintaining said cutting member (24) in a fixed reference position, and moving each of said sheet portions (17) in said straight positioning direction (K1).

4. A method as claimed in any one of Claims 1 to 3, **characterized in that** each said sheet portion (17) is translated in said straight positioning direction (K1) independently of the other sheet portion (17), and is positioned in at least one desired cutting position with respect to said cutting member (24).

5. A method as claimed in Claim 4, **characterized in that** said sheet portions (17) are moved in said straight positioning direction (K1) by engaging each sheet portion (17) by means of relative lifting means (42), and moving the lifting means (42) up and down in said straight positioning direction (K1).

6. A method as claimed in Claim 5, **characterized in that** said sheet portions (17) are moved in said straight positioning direction (K1) by resting the bottom end of each sheet portion (17) on the relative lifting means (42).

7. A method as claimed in any one of the foregoing Claims, **characterized in that** the flat products (3) formed by cutting and parting said sheet portions (17) are moved successively into a lowered unloading position and unloaded by translating them parallel to themselves in said straight feed direction (A).

8. A method as claimed in Claim 6 or 7, **characterized in that** said flat products (3) are moved by successively resting said flat products (3) on the respective said lifting means (42), and moving the lifting means (42) to and from said lowered unloading position.

9. A method as claimed in Claim 8, **characterized in that** said flat products (3) are rested successively on the respective lifting means by releasably retaining the top flat products (3) as the bottom flat products (3) are unloaded; moving the lifting means (42) back into a loading position beneath the top flat products (3); and lowering the top flat products (3) onto the respective lifting means (42).

10. A method as claimed in Claim 9, **characterized in that** the top flat products are retained by retaining means (20, 21) associated with said cutting member (24).

11. A method as claimed in Claim 1, **characterized in that** translation of the sheet portions (17) with respect to the cutting member (24) in said straight positioning direction (K1) comprises translating the cutting member (24) up and down in said straight positioning direction (K1) into a number of different reference positions.

12. An apparatus (1) for cutting and parting sheets of glass, and for moving said sheets along an horizontal direction (A) in the plane of the sheets, the apparatus comprising:
- supporting means (6) for supporting a sheet (2) to be cut and parted in a vertical or on-edge position;
- at least one first cutting member (24, 16) for cutting said sheet (2), positioned on edge, along at least one first cutting line perpendicular to the direction (A);
- first parting means (25,16) for parting the sheet along said first cutting line to form at least two side by side sheet portions (17) positioned on edge;
- conveying means (28, 29) for transferring said sheet portions (17) to a cutting-parting station (13);
- at least one second cutting member (24,33), located at said cutting-parting station (13), to cut each said sheet portion (17) along at least one second cutting line in a direction (A') parallel to the direction (A); and second parting means (25, 33) for parting the sheet portion (17) along said second cutting line to form flat products (3);
**characterized in that**:
- said conveying means (28, 29) comprises linear conveying means (28, 29) for translating said sheet portions (17), parallel to themselves, in a straight feed direction (A); and
- said apparatus also comprises a drive means (18,19) for driving said second cutting member (24, 33) and imparting to the second cutting member at least one travel component in a direction (A') parallel to said straight feed direction (A); and
- said apparatus also comprises actuating means (35, 41) for translating the sheet portions (17) and the second cutting member (24) with respect to one another in a straight positioning direction (K1) perpendicular to said straight feed direction (A).

13. An apparatus as claimed in Claim 12, **characterized in that** said second cutting member (24) is fitted to a supporting frame (32) to move back and forth parallel to said straight feed direction (A); said supporting frame being positioned in a cutting position, and said actuating means comprising moving means for moving said sheet portions (17) up and down in said straight positioning direction (K1) with respect to said supporting frame.

14. An apparatus as claimed in Claim 13, **characterized in that** said moving means comprise lifting means (43, 45) for engaging said sheet portions (17).

15. An apparatus as claimed in Claim 14, **characterized in that** said lifting means comprise a supporting surface (42) for supporting the bottom ends of said sheet portions (17).

16. An apparatus as claimed in Claim 14 or 15, **characterized in that** said lifting means comprise, for each said sheet portion (17), a respective powered lifting device movable up and down in said straight positioning direction (K1) independently of the other lifting devices.

17. An apparatus as claimed in Claim 16, **characterized in that** each of said lifting devices comprises a respective supporting surface for supporting a bottom edge of the relative said sheet portion (17).

18. An apparatus as claimed in Claim 17, **characterized in that** said supporting surface is configurable as a function of the dimension of the relative said sheet portion (17) measured parallel to said straight feed direction (A).

19. An apparatus as claimed in Claim 18, **characterized in that** each said supporting surface comprises a number of supporting members (42) varying as a function of said dimension of the relative sheet portion (17).

20. An apparatus as claimed in Claim 19, **characterized in that** said supporting members (42) are arranged side by side and parallel, and extend perpendicularly to the straight feed direction (A) and the straight positioning direction (K1).

21. An apparatus as claimed in Claim 20, **characterized by** comprising, for each said supporting member (42), a linear actuator (45) for moving the supporting member (42) up and down in said straight positioning direction (K1) ; control means (46) being provided to control each said linear actuator (45) independently of the other linear actuators.

22. An apparatus as claimed in Claim 21, **characterized in that** each said lifting device comprises at least one linear actuator, and connecting means (43a) for connecting a variable number of said supporting members (42) to said linear actuator.

23. An apparatus as claimed in one of Claims 19 to 22, **characterized by** comprising a bottom roller table (36) with powered rollers, for supporting said bottom edge of each of said sheet portions (17); said supporting members (42) alternating with the rollers (37) of said roller table (36), and being movable to and from a lowered unloading position, in which said supporting members extend beneath said roller table (36), so that the sheet 15 portions (17) rest solely on said rollers (37).

24. An apparatus as claimed in one of Claims 13 to 23, **characterized by** comprising actuating means (35) for moving said supporting frame (32) up and down in said straight positioning direction (K1) into a number of said cutting positions.

## Patentansprüche

1. Verfahren zum Schneiden und Trennen von Glasplatten und zum Bewegen der Platten entlang einer horizontalen Richtung (A) in der Ebene der Platten, wobei das Verfahren die folgenden Schritte aufweist:
- Anordnen einer zu schneidenden und trennenden Platte (2) in einer vertikalen oder Kantenposition;
- Schneiden der Platte (2) entlang mindestens einer ersten Schnittlinie, die senkrecht zur Richtung (A) ist;
- Trennen der Platte entlang der ersten Schnittlinie, um mindestens zwei seitlich nebeneinander angeordnete Plattenteile (17), die auf der Kante stehen, zu bilden;
- Transferieren der Plattenteile (17) zu einer Schneiden-Trennen-Station (13); und an der Schneiden-Trennen-Station
- Schneiden jedes Plattenteils entlang mindestens einer zweiten Schnittlinie in eine Richtung (A'), die parallel zur Richtung (A) ist; und
- Trennen des Plattenteils entlang der zweiten Schnittlinie, um Flachprodukte (3) zu bilden;
**dadurch gekennzeichnet, dass** die Plattenteile (17) zur Schneiden-Trennen-Station (13) transferiert werden, indem die Plattenteile (17) in einer geraden Zuführungsrichtung (A) parallel zueinander verschoben werden; dann jeder Plattenteil (17) und ein Schneideelement (24) positioniert werden, indem sie in einer geraden Positionierungsrichtung (K1), die transversal zur geraden Zuführungsrichtung (A) ist, relativ zueinander verschoben werden, und anschließend jeder Plattenteil entlang der zweiten Schnittlinie geschnitten wird, indem dem Schneideelement (24) mindestens eine Laufkomponente in eine Richtung (A'), die parallel zur geraden Zuführungsrichtung (A) ist, auferlegt wird.

2. Verfahren nach Anspruch 1, **dadurch gekennzeichnet, dass** mehrere Plattenteile (17) zu der Schneiden-Trennen-Station (17) transferiert werden und alle Plattenteile (17) gleichzeitig entlang der zweiten Schnittlinie geschnitten werden.

3. Verfahren nach Anspruch 1 oder 2, **dadurch gekennzeichnet, dass** die Plattenteile (17) und das Schneideelement (24) entlang der geraden Positionierungsrichtung (K1) relativ zueinander verschoben werden, indem das Schneideelement (24) in einer festen Referenzposition gehalten wird und jeder Plattenteil (17) entlang der geraden Positionierungsrichtung (K1) bewegt wird.

4. Verfahren nach einem der Ansprüche 1 bis 3, **dadurch gekennzeichnet, dass** jeder Plattenteil (17) unabhängig von einem anderen Plattenteil (17) entlang der geraden Positionierungsrichtung (K1) verschoben wird und in mindestens einer gewünschten Schneideposition relativ zum Schneideelement (24) positioniert wird.

5. Verfahren nach Anspruch 4, **dadurch gekennzeichnet, dass** die Plattenteile (17) entlang der geraden Positionierungsrichtung (K1) bewegt werden, indem jeder Plattenteil (17) von einer jeweiligen Hebeeinrichtung (42) gegriffen wird und die Hebeeinrichtung (42) entlang der geraden Positionierungsrichtung (K1) aufwärts und abwärts bewegt wird.

6. Verfahren nach Anspruch 5, **dadurch gekennzeichnet, dass** die Plattenteile (17) entlang der geraden Positionierungsrichtung (K1) bewegt werden, wobei das untere Ende jedes Plattenteils (17) auf der jeweiligen Hebeeinrichtung (42) ruht.

7. Verfahren nach einem der vorstehenden Ansprüche, **dadurch gekennzeichnet, dass** die durch Schneiden und Trennen der Plattenteile (17) gebildeten Flachprodukte (3) nacheinander in eine gesenkte Ausgabeposition bewegt werden und ausgegeben werden, indem sie parallel zueinander entlang der geraden Zuführungsrichtung (A) verschoben werden.

8. Verfahren nach Anspruch 6 oder 7, **dadurch gekennzeichnet, dass** die Flachprodukte (3) bewegt werden, indem die Flachprodukte (3) nacheinander auf der jeweiligen Hebeeinrichtung (42) getragen werden und die Hebeeinrichtung (42) in die und aus der gesenkten Ausgabeposition bewegt wird.

9. Verfahren nach Anspruch 8, **dadurch gekennzeichnet, dass** die Flachprodukte (3) nacheinander auf der jeweiligen Hebeeinrichtung getragen werden, indem die oberen Flachprodukte (3) lösbar festgehalten werden, während die unteren Flachprodukte (3) ausgegeben werden; die Hebeeinrichtung (42) sich zurück in eine Aufnahmeposition unterhalb der oberen Flachprodukte (3) bewegt; und die oberen Flachprodukte (3) auf die jeweiligen Hebeeinrichtungen (42) herunter gesenkt werden.

10. Verfahren nach Anspruch 9, **dadurch gekennzeichnet, dass** die oberen Flachprodukte von Halteeinrichtungen (20,21), die mit dem Schneideelement (24) in Verbindung stehen, gehalten werden.

11. Verfahren nach Anspruch 1, **dadurch gekennzeichnet, dass** das Verschieben der Plattenteile (17) relativ zum Schneideelement (24) entlang der geraden Positionierungsrichtung (K1) aufweist: Verschieben des Schneideelements (24) entlang der geraden Positionierungsrichtung (K1) aufwärts und abwärts in mehrere verschiedene Referenzpositionen.

12. Vorrichtung (1) zum Schneiden und Trennen von Glasplatten und zum Bewegen der Glasplatten entlang einer horizontalen Richtung (A) in der Ebene der Platten, wobei die Vorrichtung aufweist:
- Halteeinrichtung (6) zum Halten einer zu schneidenden und trennenden Platte (2) in einer vertikalen oder Auf-Kanteposition;
- mindestens ein erstes Schneideelement (24,16) zum Schneiden der auf der Kante stehenden Platte (2) entlang mindestens einer ersten Schnittlinie, die senkrecht zur Richtung (A) ist;
- erste Trenneinrichtung (25,16) zum Trennen der Platte entlang der ersten Schnittlinie, um mindestens zwei seitlich nebeneinander angeordnete, auf der Kante stehende Plattenteile (17) zu bilden;
- Transporteinrichtung (28,29) zum Transferieren der Plattenteile (17) zu einer Schneiden-Trennen-Station (13);
- mindestens ein an der Schneiden-Trennen-Station (13) angeordnetes zweites Schneideelement (24,33), um jeden Plattenteil (17) entlang mindestens einer zweiten Schnittlinie in eine Richtung (A'), die parallel zur Richtung (A) ist, zu schneiden; und
- zweite Trenneinrichtung (25,33) zum Trennen des Plattenteils (17) entlang der zweiten Schnittlinie, um Flachprodukte (3) zu bilden;
**dadurch gekennzeichnet, dass**
- die Transporteinrichtung (28,29) eine lineare Transporteinrichtung (28,29) aufweist, um die Plattenteile (17) parallel zueinander in einer geraden Zuführungsrichtung (A) zu verschieben; und
- die Vorrichtung außerdem eine Antriebseinrichtung (18,19) aufweist, um das zweite Schneideelement (24,33) anzutreiben und dem zweiten Schneideelement mindestens eine Laufkomponente in eine Richtung (A'), die parallel zur geraden Zuführungsrichtung (A) ist, aufzuerlegen; und
- die Vorrichtung außerdem eine Betätigungseinrichtung (35,41) aufweist, um die Plattenteile (17) und das zweite Schneideelement (24) entlang einer geraden Positionierungsrichtung (K1), die senkrecht zur geraden Zuführungsrichtung (A) ist, relativ zueinander zu verschieben.

13. Vorrichtung nach Anspruch 12, **dadurch gekennzeichnet, dass** das zweite Schneideelement (24) an einem Trägerrahmen (32) angebracht ist, um es parallel zur geraden Zuführungsrichtung (A) vor und zurück zu bewegen, während der Trägerrahmen in einer Schneideposition positioniert ist, und dass die Betätigungseinrichtung eine Bewegungseinrichtung aufweist, um die Plattenteile (17) entlang einer geraden Positionierungsrichtung (K1) aufwärts und abwärts relativ zum Trägerrahmen zu bewegen.

14. Vorrichtung nach Anspruch 13, **dadurch gekennzeichnet, dass** die Bewegungseinrichtung eine Hebeeinrichtung (43,45) aufweisen, um die Plattenteile (17) zu greifen.

15. Vorrichtung nach Anspruch 14, **dadurch gekennzeichnet, dass** die Hebeeinrichtung eine Trägerfläche (42) aufweisen, um die unteren Enden der Plattenteile (17) zu tragen.

16. Vorrichtung nach Anspruch 14 oder 15, **dadurch gekennzeichnet, dass** die Hebeeinrichtung für jeden Plattenteil (17) eine jeweilige kraftbetriebene Hebevorrichtung aufweisen, die unabhängig von den anderen Hebevorrichtungen entlang der geraden Positionierungsrichtung (K1) aufwärts und abwärts bewegbar ist.

17. Vorrichtung nach Anspruch 16, **dadurch gekennzeichnet, dass** jede der Hebevorrichtungen eine jeweilige Trägerfläche zum Tragen einer unteren Kante des jeweiligen Plattenteils (17) aufweist.

18. Vorrichtung nach Anspruch 17, **dadurch gekennzeichnet, dass** die Trägerfläche konfigurierbar ist in Abhängigkeit von der Abmessung des jeweiligen Plattenteils (17), gemessen parallel zur geraden Zuführungsrichtung (A).

19. Vorrichtung nach Anspruch 18, **dadurch gekennzeichnet, dass** jede Trägerfläche eine in Abhängigkeit von der Abmessung des jeweiligen Plattenteils (17) variierende Anzahl von Trägerelementen (42) aufweist.

20. Vorrichtung nach Anspruch 19, **dadurch gekennzeichnet, dass** die Trägerelemente (42) seitlich nebeneinander und parallel angeordnet sind und sich senkrecht zur geraden Zuführungsrichtung (A) und geraden Positionierungsrichtung (K1) erstrecken.

21. Vorrichtung nach Anspruch 20, **dadurch gekennzeichnet, dass** sie für jedes Trägerelement (42) einen linearen Aktuator (45) aufweist, um das Trägerelement (42) entlang der geraden Positionierungsrichtung (K1) aufwärts und abwärts zu bewegen; wobei die Steuereinrichtung (46) bereitgestellt ist, um jeden linearen Aktuator (45) unabhängig von den anderen linearen Aktuatoren zu steuern.

22. Vorrichtung nach Anspruch 21, **dadurch gekennzeichnet, dass** jede Hebevorrichtung aufweist: mindestens einen linearen Aktuator und eine Verbindungseinrichtung (43a) zum Verbinden einer variablen Anzahl von Trägerelementen (42) mit dem linearen Aktuator.

23. Vorrichtung nach einem der Ansprüche 19 bis 22, **dadurch gekennzeichnet, dass** sie einen mit angetriebenen Rollen (37) versehenen unteren Rollentisch (36) zum Tragen der unteren Kante jedes Plattenteils (17) aufweist; wobei Trägerelemente (42) und Rollen (37) des Rollentisches (36) abwechselnd angeordnet sind und die Trägerelemente (42) in eine und aus einer gesenkten Ausgabeposition, in welcher die Trägerelemente unterhalb des Rollentisches (36) angeordnet sind, bewegbar sind, so dass die Plattenteile (17) nur auf den Rollen (37) ruhen.

24. Vorrichtung nach einem der Ansprüche 13 bis 23, **dadurch gekennzeichnet, dass** sie eine Betätigungseinrichtung (35) aufweist, um den Trägerrahmen (32) entlang der geraden Positionierungsrichtung (K1) aufwärts und abwärts in mehrere Schneidepositionen zu bewegen.

## Revendications

1. Procédé pour couper et pour diviser des feuilles de verre, et pour déplacer lesdites feuilles selon une direction horizontale (A) dans le plan des feuilles, le procédé comportant les étapes suivantes :
- positionner une feuille (2) destinée à être coupée et divisée, dans une position verticale ou sur la tranche ;
- couper ladite feuille (2) selon au moins une première ligne de coupe perpendiculaire à ladite direction (A) ;
- diviser la feuille le long de ladite première ligne de coupe pour former au moins deux parties de feuilles (17) positionnées côte à côte sur la tranche ;
- transférer les parties de feuilles (17) vers une station de marquage-rupture (13) ; et,
- dans la station de marquage-rupture, couper chacune desdites parties de feuilles selon au moins une seconde ligne de coupe dans une direction (A'), parallèle à la direction (A),
- et partager la partie de feuille le long de cette seconde ligne de coupe pour réaliser des produits plans (3) ;
**caractérisé en ce que** lesdites parties de feuilles (17) sont transférées vers la station de marquage-rupture (13) en translatant les parties de feuilles (17) parallèlement à elles-mêmes selon une direction rectiligne d'approvisionnement (A) ; et ensuite en positionnant chaque partie de feuille (17) et l'organe de coupe (24) en les translatant l'un par rapport à l'autre dans une direction rectiligne de positionnement (K1), transversale par rapport à ladite direction rectiligne d'approvisionnement (A) et ensuite, chaque partie de feuille est coupée selon la seconde ligne de coupe en imposant à un organe de coupe (24) au moins une composante de trajectoire dans une direction (A') parallèle à ladite direction rectiligne d'approvisionnement (A).

2. Procédé selon la revendication 1, **caractérisé en ce que** l'on transfère plusieurs desdites parties de feuilles (17) vers ladite station de marquage-rupture et l'on coupe toutes les parties (17) simultanément selon ladite seconde ligne de coupe.

3. Procédé selon la revendication 1 ou 2, **caractérisé en ce que**, lesdites parties de feuilles (17) et ledit organe de coupe (24) sont translatés l'un par rapport à l'autre dans ladite direction rectiligne de positionnement (K1) en maintenant ledit organe de coupe (24) dans une position fixe de référence, et en déplaçant chacune desdites parties de feuilles (17) dans ladite direction de positionnement rectiligne (K1).

4. Procédé selon l'une quelconque des revendications 1 à 3, **caractérisé en ce que** chacune desdites parties de feuilles (17) est translatée indépendamment l'une de l'autre dans ladite direction rectiligne de positionnement (K1) et est positionnée dans au moins une position de coupe désirée, par rapport audit organe de coupe (24).

5. Procédé selon la revendication 4, **caractérisé en ce que** lesdites parties de feuilles (17) sont déplacées dans ladite direction rectiligne de positionnement (K1) en prenant en charge chaque partie de feuille (17) par des moyens élévateurs (42) et en déplaçant les moyens élévateurs (42) vers le haut et vers le bas selon ladite direction rectiligne de positionnement (K1).

6. Procédé selon la revendication 5, **caractérisé en ce que** lesdites parties de feuilles (17) sont déplacées dans ladite direction rectiligne de positionnement (K1) en appuyant l'extrémité de chaque partie de feuille (17) sur le moyen élévateur correspondant (42).

7. Procédé selon l'une quelconque des revendications précédentes, **caractérisé en ce que** les produits plans (3) fabriqués par la coupe et la division de parties de feuilles (17) sont déplacés successivement vers une position de déchargement abaissée et sont déchargés par translation, parallèlement à eux-mêmes, dans ladite direction rectiligne d'approvisionnement (A).

8. Procédé selon la revendication 6 ou 7, **caractérisé en ce que** les produits plans (3) sont déplacés en maintenant successivement lesdits les produits plans (3) sur les moyens élévateurs respectifs (42), et en déplaçant les moyens élévateurs respectifs (42) vers et en provenance de ladite position de déchargement abaissée.

9. Procédé selon la revendication 8, **caractérisé en ce que** les produits plans (3) sont maintenus successivement sur les moyens élévateurs en maintenant de façon amovible le produit plan (3) supérieur lorsque le produit plan (3) inférieur est déchargé ; en déplaçant les moyens élévateurs (42) en arrière dans une position de chargement localisée en-dessous du produit plan (3) supérieur; et en abaissant le produit plan (3) supérieur sur les moyens élévateurs (42) respectifs.

10. Procédé selon la revendication 9, **caractérisé en ce que** le produit plan supérieur est retenu par des moyens de retenue (20, 21) associés audit organe de coupe (24).

11. Procédé selon la revendication 1, **caractérisé en ce que** la translation des parties de feuilles (17) par rapport à l'organe de coupe (24) dans ladite direction rectiligne de positionnement (K1) comprend la translation de l'organe de coupe (24) vers le haut et le bas selon ladite direction rectiligne de positionnement (K1) vers un certain nombre de positions de référence.

12. Appareil (1) pour découper et pour diviser des feuilles de verre, et pour déplacer lesdites feuilles selon une direction horizontale (A) dans le plan des feuilles, l'appareil comportant :
- des moyens de support (6) pour porter une feuille (2) destinée à être coupée et séparée dans une position verticale ou sur la tranche ;
- au moins un premier organe de coupe (24, 16) pour couper ladite feuille (2), positionnée sur la tranche, le long d'au moins une première ligne de coupe perpendiculaire à la direction (A) ;
- un premier moyen de partage (25, 16) pour partager ladite feuille selon ladite première ligne de coupe pour former au moins deux parties de feuilles (17) positionnées côte à côte sur la tranche ;
- des moyens de transfert (28, 29) pour transférer les parties de feuilles (17) vers une station de marquage-rupture (13) ;
- au moins un second organe de coupe (24, 33) disposé dans ladite station de marquage-rupture (13) ; pour couper chacune desdites parties de feuille (17) selon au moins une seconde ligne de coupe (A') parallèle à la direction (A) ; et des seconds moyens de partage (25, 33) pour partager la partie de feuille (17) selon la seconde ligne de coupe pour former des produits plans (3) ;
**caractérisé en ce que** :
- lesdits moyens de transfert (28, 29) comportent des moyens de convoyage linéaires (28, 29) pour transférer lesdites parties de feuilles (17), parallèlement à elles-mêmes selon une direction rectiligne d'approvisionnement (A) ; et
- ledit appareil comporte également des moyens d'entraînement (18, 19) pour entraîner le second élément de coupe (24, 33) en imposant au second organe de coupe au moins une composante de trajectoire dans une direction (A') parallèle à ladite direction rectiligne d'approvisionnement (A), et
- ledit appareil comporte également des moyens d'actionnement (35, 41) pour translater les parties de feuilles (17) et le second organe de coupe (24), les uns relativement à l'autre, dans une direction rectiligne (K1) perpendiculaire à la direction rectiligne d'approvisionnement (A).

13. Appareil selon la revendication 12, **caractérisé en ce que** ledit second élément de coupe (24) est fixé sur un cadre du support (32) pour se déplacer vers l'avant et vers l'arrière parallèlement à ladite direction rectiligne d'approvisionnement (A) ; ledit cadre du support étant positionné dans une position de coupe, et lesdits moyens d'actionnement comportant des moyens de déplacement pour déplacer les parties de feuilles (17) vers le haut et vers le bas dans ladite direction rectiligne de positionnement (K1) par rapport audit cadre de support.

14. Appareil selon la revendication 13, **caractérisé en ce que** lesdits moyens d'actionnement comportent des moyens élévateurs (43, 45) pour prendre en charge lesdites parties de feuilles (17).

15. Appareil selon la revendication 14, **caractérisé en ce que** lesdits moyens d'actionnement comportent des moyens élévateurs ayant une surface de support (42) pour supporter les extrémités inférieures desdites parties de feuilles (17).

16. Appareil selon la revendication 14 ou 15, **caractérisé en ce que** lesdits moyens élévateurs comportent, pour chacune desdites parties de feuilles (17) un dispositif de levage motorisé correspondant, mobile vers le haut et vers le bas selon ladite direction de positionnement rectiligne (K1), indépendant des autres dispositifs de levage.

17. Appareil selon la revendication 16, **caractérisé en ce que** chacun desdits dispositifs de levage comporte une surface de support respective pour porter un bord inférieur de la partie de feuille correspondante (17).

18. Appareil selon la revendication 17, **caractérisé en ce que** ladite surface de support peut être configurée en fonction de la dimension relative de ladite partie de feuille correspondante (17) mesurée parallèlement à ladite direction rectiligne d'approvisionnement (A).

19. Appareil selon la revendication 18, **caractérisé en ce que** chacune desdites surfaces de support comprend plusieurs organes supports (42) variant en fonction desdites dimensions de la partie de feuille (17) correspondante.

20. Appareil selon la revendication 19, **caractérisé en ce que** lesdits organes supports (42) sont disposés côte à côte et sont parallèles et s'étendent perpendiculairement par rapport à ladite direction rectiligne d'approvisionnement (A) et la direction rectiligne de positionnement (K1).

21. Appareil selon la revendication 20, **caractérisé en ce qu'**il comporte, pour chacun desdits organes supports (42), un actionneur linéaire (45) pour déplacer les organes supports (42) vers le haut et le bas selon ladite direction rectiligne de positionnement (K1); des moyens de commande (46) agencés pour commander chaque actionneur linéaire (45) indépendamment des autres actionneurs linéaires.

22. Appareil selon la revendication 21, **caractérisé en ce que** chacun desdits moyens élévateurs comporte au moins un activateur linéaire et des moyens de connexion (43a) pour connecter un nombre variable desdits organes supports (42) audit actionneur linéaire.

23. Appareil selon l'une des revendications 19 à 22, **caractérisé en ce qu'**il comprend une table roulante inférieure (36) avec des rouleaux entraînés, pour porter ledit bord inférieur de chacune des parties de feuilles (17) ; lesdits organes supports (42), alternativement avec les rouleaux (37) de ladite table roulante (36) étant mobiles vers et en provenance de la position de déchargement inférieure, dans lequel lesdits organes supports s'étendent en-dessous de ladite table roulante (36), de telle sorte que les parties 15 de feuilles (17) restent seules sur les rouleaux (37).

24. Appareil selon l'une des revendications 13 à 23, **caractérisé en ce qu'**il comprend des moyens d'activation (35) pour déplacer ledit cadre de support (32) vers le haut et vers le bas dans ladite direction rectiligne de positionnement (K1) dans plusieurs positions de coupe.
